# EUROPEAN PATENT SPECIFICATION

(11) **EP 2 873 166 B1**
(45) Date of publication and mention of the grant of the patent: **18.10.2017**
(21) Application number: 13816293.8
(22) Date of filing: 09.05.2013
(51) Int. Cl.: H04B 7/185, H04W 4/00, H04W 84/02, H04B 10/112, G05D 1/10, B64D 1/02, B64B 1/40, B64B 1/62

(54) **GEO-FENCING**
GEOFENCING
GÉOREPÉRAGE

(30) Priority: 12.07.2012 US 201213547503
(43) Date of publication of application: 20.05.2015
(73) Proprietor: X Development LLC, Mountain View, CA 94043 (US)
(72) Inventor: TELLER, Eric, Mountain View, CA 94043 (US); DEVAUL, Richard, Wayne, Mountain View, CA 94043 (US); WEAVER, Joshua, Mountain View, CA 94043 (US); BIFFLE, Clifford, L., Mountain View, CA 94043 (US); RHODES, Bradley, Mountin View, CA 94043 (US); STAAF, Anton, Mountain View, CA 94043 (US)
(74) Representative: Hewett, Jonathan Michael Richard
(86) International application number: PCT/US2013/040324
(87) International publication number: WO 2014/011316

(56) References cited:
- DE-A1- 4 023 112
- US-A- 2 871 597
- US-A1- 2002 072 361
- US-A1- 2002 167 702
- US-A1- 2005 014 499
- US-A1- 2006 002 326
- US-A1- 2008 284 588
- US-A1- 2009 224 094
- US-A1- 2011 148 634

## Description

United States Patent Application US 2005/014499, which is considered being the closest prior art, relates to unmanned lighter-than-air platforms operating in the stratosphere.

United States Patent Application US 2,871,597 discloses a dropping mechanism particularly adapted to be attached to high altitude balloons for dropping units of the payload of the balloon at predetermined intervals.

According to an aspect of the present invention, there is provided a method according to claim 1.

According to a further aspect of the present invention, there is provided a balloon according to claim 8.

According to a further aspect of the present invention, there is provided a non-transitory computer-readable medium according to claim 13.

Optional features are set out in the dependent claims.

These as well as other aspects, advantages, and alternatives, will become apparent to those of ordinary skill in the art by reading the following detailed description, with reference where appropriate to the accompanying drawings.

### SUMMARY

In a first aspect, a method is provided. The method includes determining a position of a balloon with respect to a predetermined zone. The predetermined zone includes an exclusion zone and a shadow zone. The balloon includes a cut-down device, a payload, and an envelope. The method also includes causing, using the cut-down device, at least the payload to land in response to a determination that the position of the balloon is within the predetermined zone.

In a second aspect, a balloon is provided. The balloon includes an envelope, a payload, a cut-down device, and a control system. The cut-down device is configured to cause at least the payload to land. The control system is configured to: i) determine a position of the balloon with respect to a predetermined zone, which includes an exclusion zone and a shadow zone; and ii) cause the cut-down device to cause at least the payload to land in response to a determination that the position of the balloon is within the predetermined zone.

In a third aspect, a non-transitory computer readable medium having stored instructions is provided. The instructions are executable by a computing device to cause the computing device to perform functions. The functions include determining a position of a balloon with respect to a predetermined zone. The predetermined zone includes an exclusion zone and a shadow zone. The balloon includes a cut-down device, a payload, and an envelope. The functions also include causing, using the cut-down device, at least the payload to land in response to a determination that the position of the balloon is within the predetermined zone.

In a fourth aspect, a method is provided. The method includes determining a condition of a balloon. The balloon includes a cut-down device, a payload, and an envelope. The method also includes causing, using the cut-down device, at least the payload to land in response to a determination that the condition of the balloon matches at least one of a plurality of predetermined conditions.

These as well as other aspects, advantages, and alternatives, will become apparent to those of ordinary skill in the art by reading the following detailed description, with reference where appropriate to the accompanying drawings.

### BRIEF DESCRIPTION OF THE DRAWINGS

Figure 1 is a simplified block diagram illustrating a balloon network, according to an example embodiment.
Figure 2 is a block diagram illustrating a balloon-network control system, according to an example embodiment.
Figure 3 is a simplified block diagram illustrating a high-altitude balloon, according to an example embodiment.
Figure 4 is a simplified block diagram illustrating a balloon network that includes super-nodes and sub-nodes, according to an example embodiment.
Figure 5A illustrates an overhead view of a balloon operation scenario at a first time, according to an example embodiment.
Figure 5B illustrates an elevation view of the balloon operation scenario at the first time, according to an example embodiment.
Figure 5C illustrates an elevation view of a balloon operation scenario at a second time, according to an example embodiment.
Figure 5D illustrates an elevation view of a balloon operation scenario, according to an example embodiment.
Figure 6A is a flowchart illustrating a method, according to an example embodiment.
Figure 6B is a flowchart illustrating a method, according to an example embodiment.
Figure 7 is a schematic diagram of a computer program product, according to an example embodiment.

### DETAILED DESCRIPTION

Example methods and systems are described herein. Any example embodiment or feature described herein is not necessarily to be construed as preferred or advantageous over other embodiments or features. The example embodiments described herein are not meant to be limiting. It will be readily understood that certain aspects of the disclosed systems and methods can be arranged and combined in a wide variety of different configurations, all of which are contemplated herein.

Furthermore, the particular arrangements shown in the Figures should not be viewed as limiting. It should be understood that other embodiments may include more or less of each element shown in a given Figure. Further, some of the illustrated elements may be combined or omitted. Yet further, an example embodiment may include elements that are not illustrated in the Figures.

### 1. Overview

Example embodiments disclosed herein relate to determining a position of a balloon with respect to a predetermined zone that includes an exclusion zone and a shadow zone. The balloon includes a cut-down device, a payload, and an envelope. The example embodiments further relate to causing, using the cut-down device, at least the payload to land in response to a determination that the position of the balloon is within the predetermined zone.

For example, a method and apparatus could be used to prevent a balloon in a high-altitude balloon network from entering certain airspaces by causing at least a payload of a balloon to land based on a position of the balloon. For example, a cut-down device could cause at least the payload to land when the balloon reaches a predetermined "geo-fence'" or predetermined zone. The geo-fence may or may not include vertical bounds. For example, one zone might include any airspace above a particular country while another zone might only include airspace within 10 kilometres of a particular airport that is also below 60,000 feet. The geo-fence could enclose a geographic area or any other type of restricted airspace, which may be termed an exclusion zone. The geo-fence could alternatively or additionally include both the exclusion zone and a shadow zone around the exclusion zone. The shadow zone could include locations from which the balloon would be likely to drift into the exclusion zone based on, e.g., historic weather patterns or expected environmental conditions. The shadow zone could be determined based on, for example, a probability of the balloon entering the exclusion zone. For example, the shadow zone may extend beyond the boundaries of the exclusion zone to locations where wind patterns cause the balloon to be more likely than a predetermined likelihood to enter the exclusion zone compared to other locations outside the shadow zone. The shadow zone may be determined based on the probability that a payload would enter the exclusion zone after a cut-down event. For instance, a shadow zone might include the union of those regions where the probability that without cut-down, the balloon would enter an exclusion zone is higher than a first threshold probability and those regions where the probability that after cutdown the payload would land in an exclusion zone is higher than a second threshold probability. Additionally or alternatively, the boundaries of the shadow zone could be based on the condition of the balloon. For instance, a hardware and/or a software malfunction (e.g., the parachute deployment system is not working) could cause the boundaries of the shadow zone to be adjusted. The boundaries of the shadow zone could also be based on the ability of the balloon to steer or be steered away from the exclusion zone. For example, the shadow zone for a balloon that has the ability to adjust its position either horizontally or vertically might contain those regions from which there is a greater than a threshold probability that the balloon would necessarily enter an exclusion zone regardless of any attempts to steer away. Further, the shadow zone could be based on conditions elsewhere. For example, a country controlling an airspace could give permission for the balloon to enter its airspace. The shadow zone and/or the exclusion zone could be adjusted accordingly. Further, the exclusion zone or shadow zone might be based on the type of balloon. For example, airspaces might be restricted to only allow balloons smaller than a certain size, or to only allow balloons that include or do not include certain capabilities.

Methods disclosed herein could be carried out in part or in full by the one or more balloons in the high-altitude balloon network. For instance, a balloon in the high-altitude balloon networks could determine its position with respect to the predetermined zone. The predetermined zone could include an exclusion zone (e.g., a zone in which the balloon may be prohibited from entering), and a shadow zone (e.g., a zone in which the balloon is more likely than a predetermined likelihood to enter the exclusion zone based on expected environmental conditions and expected ability to for such expected environmental conditions to influence the balloon's position). The balloon could determine its position with respect to the predetermined zone using, for instance, at least one of a global positioning system (GPS), an inertial navigation system (INS), and a map of at least the predetermined zone.

The expected environmental conditions could be determined using various methods. For instance, the expected environmental conditions could be determined based on sensor data from sensors on the balloon (e.g., an airspeed sensor, a barometric sensor, etc.). In other embodiments, the expected environmental conditions could be determined based on information from sensors not on-board the balloon (e.g., sensors on other balloons, satellite imagery, etc.). In further embodiments, the expected environmental conditions could be determined based on atmospheric models. In yet other embodiments, the expected environmental conditions could be determined based on a historical record of wind speed and wind direction. The boundaries of the shadow zone could be determined based on at least a combination of the expected environmental conditions and the boundaries of the exclusion zone.

Upon determining that the balloon is within the predetermined zone, the method could include the balloon causing a cut-down device to cause at least the payload to land. In some embodiments, the envelope could be physically separated from the payload. In other embodiments, ballast could be added and/or a lifting gas could be vented from the envelope to reduce a buoyancy of the envelope. Other means of causing at least a payload to land are possible.

Other methods disclosed herein could be carried out in part or in full by a server and/or a server network. In an example embodiment, the position of the balloon with respect to the predetermined zone could be determined by a server networks. The server network could receive information regarding expected environmental conditions for the balloon and determine the boundaries of the shadow zone based at least on the expected environmental conditions and the boundaries of the exclusion zone. The server network could be operable to cause (e.g., by transmitting a control instruction to the balloon) the cut-down device to cause at least the payload to land in response to determining that the position of the balloon is within the predetermined zone.

Other interactions between one or more balloons in a high-altitude balloon network and a server are possible within the context of the disclosure.

An example balloon is also described in the present disclosure. The example balloon could include an envelope, a payload, a cut-down device, and a control system. The cut-down device could be configured to cause at least the payload to land. The control system could be configured to: i) determine a position of the balloon with respect to a predetermined zone; and ii) cause the cut-down device to cause at least the payload to land in response to a determination that the position of the balloon is within the predetermined zone. The predetermined zone could include an exclusion zone and a shadow zone. The balloon could be a balloon in a high-altitude balloon network.

In some embodiments, the cut-down device may include a cord and a wire proximate to the cord. The cord is mechanically connected to the envelope and to the payload. The wire (e.g., a nichrome wire) may be operable to heat up in response to an electrical signal from the cut-down device. The cord could be configured to sever in response to the heat emitted from the wire. In other embodiments, the cut-down device could be operable to cause the envelope to deflate (e.g., venting the lifting gas from the envelope) and/or take on more ballast (via a pump) so as to cause the payload and part or all of the envelope to descend to the ground.

It will be understood that the balloon could include more or fewer elements than those disclosed herein. Further the elements of the balloon could be configured and/or be operable to perform more or fewer functions within the context of the present disclosure.

In some embodiments, each of the elements of the balloon could be incorporated into at least one balloon in a high-altitude balloon network. In other embodiments, some or all of the elements could include a system, the elements of which may be located apart from other elements disclosed herein. Thus, the system could operate in a distributed manner.

Also disclosed herein are non-transitory computer readable media with stored instructions. The instructions could be executable by a computing device to cause the computing device to perform functions similar to those described in the aforementioned methods.

Those skilled in the art will understand that there are many different specific methods and systems that could be used in determining a position of a balloon with respect to a predetermined zone, which includes an exclusion zone and a shadow zone, and causing, using a cut-down device, at least a payload of the balloon to land in response to a determination that the position of the balloon is within the predetermined zone. Each of these specific methods and systems are contemplated herein, and several example embodiments are described below.

### 2. Example Systems

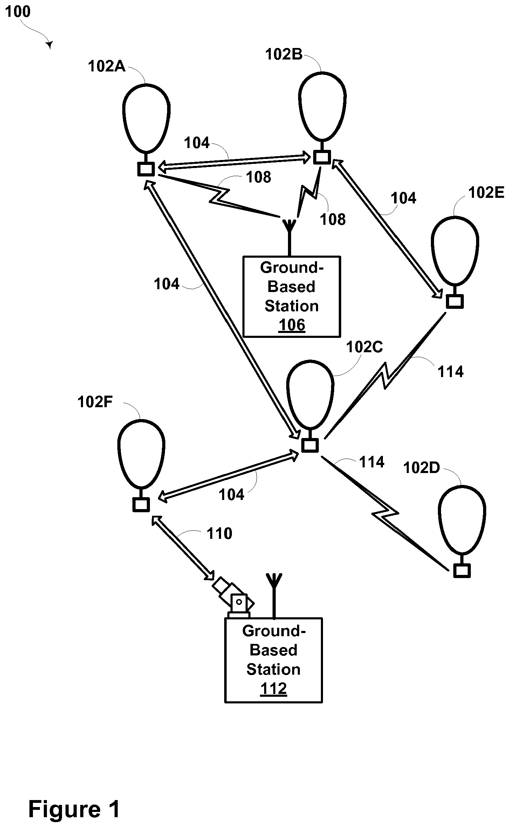

Figure 1 is a simplified block diagram illustrating a balloon network 100, according to an example embodiment. As shown, balloon network 100 includes balloons 102A to 102F, which are configured to communicate with one another via free-space optical links 104. Balloons 102A to 102F could additionally or alternatively be configured to communicate with one another via RF links 114. Balloons 102A to 102F may collectively function as a mesh network for packet-data communications. Further, at least some of balloons 102A and 102B may be configured for RF communications with ground-based stations 106 and 112 via respective RF links 108. Further, some balloons, such as balloon 102F, could be configured to communicate via optical link 110 with ground-based station 112.

In an example embodiment, balloons 102A to 102F are high-altitude balloons, which are deployed in the stratosphere. At moderate latitudes, the stratosphere includes altitudes between approximately 10 kilometers (km) and 50 km altitude above the surface. At the poles, the stratosphere starts at an altitude of approximately 8 km. In an example embodiment, high-altitude balloons may be generally configured to operate in an altitude range within the stratosphere that has relatively low wind speed (e.g., between 5 and 20 miles per hour (mph)).

More specifically, in a high-altitude-balloon network, balloons 102A to 102F may generally be configured to operate at altitudes between 18 km and 25 km (although other altitudes are possible). This altitude range may be advantageous for several reasons. In particular, this layer of the stratosphere generally has relatively low wind speeds (e.g., winds between 5 and 20 mph) and relatively little turbulence. Further, while the winds between 18 km and 25 km may vary with latitude and by season, the variations can be modeled in a reasonably accurate manner. Additionally, altitudes above 18 km are typically above the maximum flight level designated for commercial air traffic. Therefore, interference with commercial flights is not a concern when balloons are deployed between 18 km and 25 km.

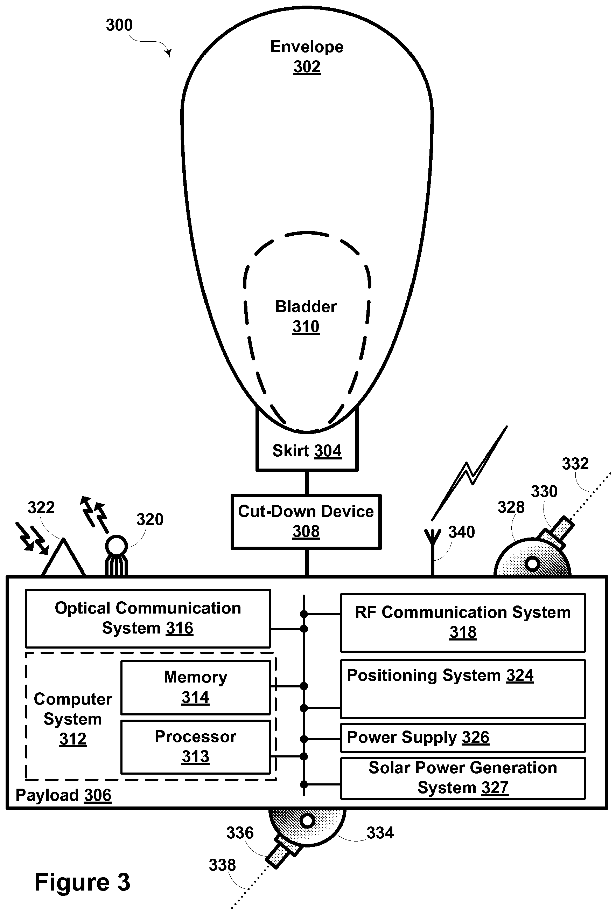

To transmit data to another balloon, a given balloon 102A to 102F may be configured to transmit an optical signal via an optical link 104. In an example embodiment, a given balloon 102A to 102F may use one or more high-power light-emitting diodes (LEDs) to transmit an optical signal. Alternatively, some or all of balloons 102A to 102F may include laser systems for free-space optical communications over optical links 104. Other types of free-space optical communication are possible. Further, in order to receive an optical signal from another balloon via an optical link 104, a given balloon 102A to 102F may include one or more optical receivers. Additional details of example balloons are discussed in greater detail below, with reference to Figure 3.

In a further aspect, balloons 102A to 102F may utilize one or more of various different RF air-interface protocols for communication with ground-based stations 106 and 112 via respective RF links 108. For instance, some or all of balloons 102A to 102F may be configured to communicate with ground-based stations 106 and 112 using protocols described in IEEE 802.11 (including any of the IEEE 802.11 revisions), various cellular protocols such as GSM, CDMA, UMTS, EV-DO, WiMAX, and/or LTE, and/or one or more propriety protocols developed for balloon-ground RF communication, among other possibilities.

In a further aspect, there may be scenarios where RF links 108 do not provide a desired link capacity for balloon-to-ground communications. For instance, increased capacity may be desirable to provide backhaul links from a ground-based gateway, and in other scenarios as well. Accordingly, an example network may also include downlink balloons, which could provide a high-capacity air-ground link.

For example, in balloon network 100, balloon 102F is configured as a downlink balloon. Like other balloons in an example network, a downlink balloon 102F may be operable for optical communication with other balloons via optical links 104. However, a downlink balloon 102F may also be configured for free-space optical communication with a ground-based station 112 via an optical link 110. Optical link 110 may therefore serve as a high-capacity link (as compared to an RF link 108) between the balloon network 100 and the ground-based station 112.

Note that in some implementations, a downlink balloon 102F may additionally be operable for RF communication with ground-based stations 106. In other cases, a downlink balloon 102F may only use an optical link for balloon-to-ground communications. Further, while the arrangement shown in Figure 1 includes just one downlink balloon 102F, an example balloon network can also include multiple downlink balloons. On the other hand, a balloon network can also be implemented without any downlink balloons.

In other implementations, a downlink balloon may be equipped with a specialized, high-bandwidth RF communication system for balloon-to-ground communications, instead of, or in addition to, a free-space optical communication system. The high-bandwidth RF communication system may take the form of an ultra-wideband system, which may provide an RF link with substantially the same capacity as one of the optical links 104. Other forms are also possible.

Ground-based stations, such as ground-based stations 106 and/or 112, may take various forms. Generally, a ground-based station may include components such as transceivers, transmitters, and/or receivers for communication via RF links and/or optical links with a balloon network. Further, a ground-based station may use various air-interface protocols in order to communicate with a balloon 102A to 102F over an RF link 108. As such, ground-based stations 106 and 112 may be configured as an access point via which various devices can connect to balloon network 100. Ground-based stations 106 and 112 may have other configuration and/or serve other purposes without departing from the scope of the invention.

In a further aspect, some or all of balloons 102A to 102F could be configured to establish a communication link with space-based satellites in addition to, or as an alternative to, a ground-based communication link. In some embodiments, a balloon may communicate with a satellite via an optical link. However, other types of satellite communications are possible.

Further, some ground-based stations, such as ground-based stations 106 and 112, may be configured as gateways between balloon network 100 and one or more other networks. Such ground-based stations 106 and 112 may thus serve as an interface between the balloon network and the Internet, a cellular service provider's network, and/or other types of networks. Variations on this configuration and other configuration of ground-based stations 106 and 112 are also possible.

### 2a) Mesh Network Functionality

As noted, balloons 102A to 102F may collectively function as a mesh network. More specifically, since balloons 102A to 102F may communicate with one another using free-space optical links, the balloons may collectively function as a free-space optical mesh network.

In a mesh-network configuration, each balloon 102A to 102F may function as a node of the mesh network, which is operable to receive data directed to it and to route data to other balloons. As such, data may be routed from a source balloon to a destination balloon by determining an appropriate sequence of optical links between the source balloon and the destination balloon. These optical links may be collectively referred to as a "lightpath" for the connection between the source and destination balloons. Further, each of the optical links may be referred to as a "hop" on the lightpath.

To operate as a mesh network, balloons 102A to 102F may employ various routing techniques and self-healing algorithms. In some embodiments, a balloon network 100 may employ adaptive or dynamic routing, where a lightpath between a source and destination balloon is determined and set-up when the connection is needed, and released at a later time. Further, when adaptive routing is used, the lightpath may be determined dynamically depending upon the current state, past state, and/or predicted state of the balloon network.

In addition, the network topology may change as the balloons 102A to 102F move relative to one another and/or relative to the ground. Accordingly, an example balloon network 100 may apply a mesh protocol to update the state of the network as the topology of the network changes. For example, to address the mobility of the balloons 102A to 102F, balloon network 100 may employ and/or adapt various techniques that are employed in mobile ad hoc networks (MANETs). Other examples are possible as well.

In some implementations, a balloon network 100 may be configured as a transparent mesh network. More specifically, in a transparent balloon network, the balloons may include components for physical switching that is entirely optical, without any electrical components involved in the physical routing of optical signals. Thus, in a transparent configuration with optical switching, signals travel through a multi-hop lightpath that is entirely optical.

In other implementations, the balloon network 100 may implement a free-space optical mesh network that is opaque. In an opaque configuration, some or all balloons 102A to 102F may implement optical-electrical-optical (OEO) switching. For example, some or all balloons may include optical cross-connects (OXCs) for OEO conversion of optical signals. Other opaque configuration are also possible. Additionally, network configuration are possible that include routing paths with both transparent and opaque sections.

In a further aspect, balloons in an example balloon networks 100 may implement wavelength division multiplexing (WDM), which may help to increase link capacity. When WDM is implemented with transparent switching, physical lightpaths through the balloon network may be subject to the "wavelength continuity constrain." More specifically, because the switching in a transparent network is entirely optical, it may be necessary to assign the same wavelength for all optical links on a given lightpath.

An opaque configuration, on the other hand, may avoid the wavelength continuity constraint. In particular, balloons in an opaque balloon network may include the OEO switching systems operable for wavelength conversion. As a result, balloons can convert the wavelength of an optical signal at each hop along a lightpath. Alternatively, optical wavelength conversion could take place at only selected hops along the lightpath.

Further, various routing algorithms may be employed in an opaque configuration. For example, to determine a primary lightpath and/or one or more diverse backup lightpath for a given connection, example balloons may apply or consider shortest-path routing techniques such as Dijkstra's algorithm and k-shortest path, and/or edge and node-diverse or disjoint routing such as Suurballe's algorithm, among others. Additionally or alternatively, techniques for maintaining a particular quality of service (QoS) may be employed when determining a lightpath. Other techniques are also possible.

### 2b) Station-Keeping Functionality

In an example embodiment, a balloon network 100 may implement station-keeping functions to help provide a desired network topology. For example, station-keeping may involve each balloon 102A to 102F maintaining and/or moving into a certain position relative to one or more other balloons in the network (and possibly in a certain position relative to the ground). As part of this process, each balloon 102A to 102F may implement station-keeping functions to determine its desired positioning within the desired topology, and if necessary, to determine how to move to the desired position.

The desired topology may vary depending upon the particular implementation. In some cases, balloons may implement station-keeping to provide a substantially uniform topology. In such cases, a given balloon 102A to 102F may implement station-keeping functions to position itself at substantially the same distance (or within a certain range of distances) from adjacent balloons in the balloon network 100.

In other cases, a balloon network 100 may have a non-uniform topology. For instance, example embodiments may involve topologies where balloons are distributed more or less densely in certain areas, for various reasons. As an example, to help meet the higher bandwidth demands that are typical in urban areas, balloons may be clustered more densely over urban areas. For similar reasons, the distribution of balloons may be denser over land than over large bodies of water. Many other examples of non-uniform topologies are possible.

In a further aspect, the topology of an example balloon network may be adaptable. In particular, station-keeping functionality of example balloons may allow the balloons to adjust their respective positioning in accordance with a change in the desired topology of the network. For example, one or more balloons could move to new positions to increase or decrease the density of balloons in a given area. Other examples are possible.

In some embodiments, a balloon network 100 may employ an energy function to determine if and/or how balloons should move to provide a desired topology. In particular, the state of a given balloon and the states of some or all nearby balloons may be input to an energy function. The energy function may apply the current states of the given balloon and the nearby balloons to a desired network state (e.g., a state corresponding to the desired topology). A vector indicating a desired movement of the given balloon may then be determined by determining the gradient of the energy function. The given balloon may then determine appropriate actions to take in order to effectuate the desired movement. For example, a balloon may determine an altitude adjustment or adjustments such that winds will move the balloon in the desired manner.

### 2c) Control of Balloons in a Balloon Network

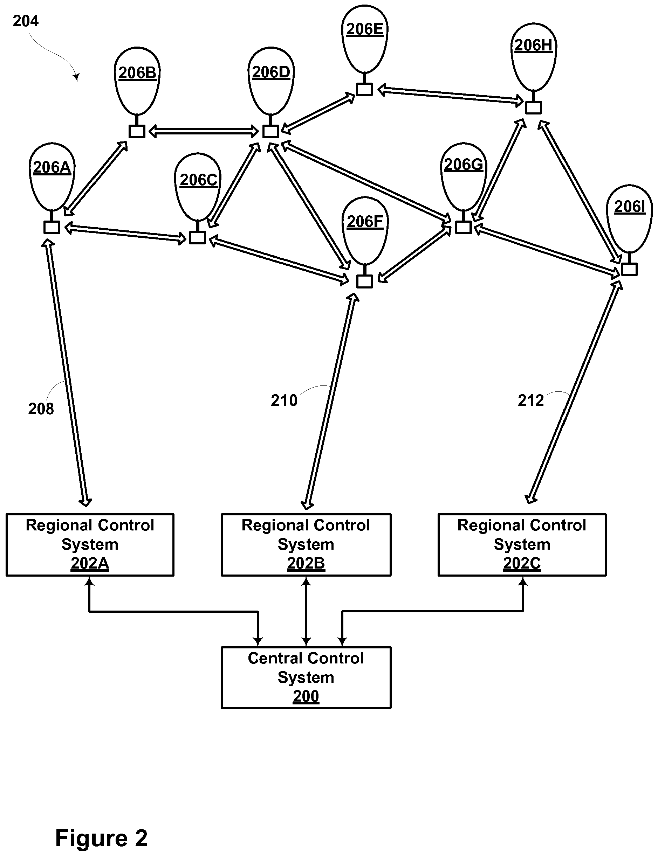

In some embodiments, mesh networking and/or station-keeping functions may be centralized. For example, Figure 2 is a block diagram illustrating a balloon-network control system, according to an example embodiment. In particular, Figure 2 shows a distributed control system, which includes a central control system 200 and a number of regional control-systems 202A to 202B. Such a control system may be configured to coordinate certain functionality for balloon network 204, and as such, may be configured to control and/or coordinate certain functions for balloons 206A to 206I.

In the illustrated embodiment, central control system 200 may be configured to communicate with balloons 206A to 206I via a number of regional control systems 202A to 202C. These regional control systems 202A to 202C may be configured to receive communications and/or aggregate data from balloons in the respective geographic areas that they cover, and to relay the communications and/or data to central control system 200. Further, regional control systems 202A to 202C may be configured to route communications from central control system 200 to the balloons in their respective geographic areas. For instance, as shown in Figure 2, regional control system 202A may relay communications and/or data between balloons 206A to 206C and central control system 200, regional control system 202B may relay communications and/or data between balloons 206D to 206F and central control system 200, and regional control system 202C may relay communications and/or data between balloons 206G to 206I and central control system 200.

In order to facilitate communications between the central control system 200 and balloons 206A to 2061, certain balloons may be configured as downlink balloons, which are operable to communicate with regional control systems 202A to 202C. Accordingly, each regional control system 202A to 202C may be configured to communicate with the downlink balloon or balloons in the respective geographic area it covers. For example, in the illustrated embodiment, balloons 206A, 206F, and 206I are configured as downlink balloons. As such, regional control systems 202A to 202C may respectively communicate with balloons 206A, 206F, and 2061 via optical links 206, 208, and 210, respectively.

In the illustrated configuration, only some of balloons 206A to 206I are configured as downlink balloons. The balloons 206A, 206F, and 2061 that are configured as downlink balloons may relay communications from central control system 200 to other balloons in the balloon network, such as balloons 206B to 206E, 206G, and 206H. However, it should be understood that in some implementations, it is possible that all balloons may function as downlink balloons. Further, while Figure 2 shows multiple balloons configured as downlink balloons, it is also possible for a balloon network to include only one downlink balloon, or possibly even no downlink balloons.

Note that a regional control system 202A to 202C may in fact just be a particular type of ground-based station that is configured to communicate with downlink balloons (e.g., such as ground-based station 112 of Figure 1). Thus, while not shown in Figure 2, a control system may be implemented in conjunction with other types of ground-based stations (e.g., access points, gateways, etc.).

In a a centralized control arrangement, such as that shown in Figure 2, the central control system 200 (and possibly regional control systems 202A to 202C as well) may coordinate certain mesh-networking functions for balloon network 204. For example, balloons 206A to 2061 may send the central control system 200 certain state information, which the central control system 200 may utilize to determine the state of balloon network 204. The state information from a given balloon may include location data, optical-link information (e.g., the identity of other balloons with which the balloon has established an optical link, the bandwidth of the link, wavelength usage and/or availability on a link, etc.), wind data collected by the balloon, and/or other types of information. Accordingly, the central control system 200 may aggregate state information from some or all of the balloons 206A to 2061 in order to determine an overall state of the network.

The overall state of the network may then be used to coordinate and/or facilitate certain mesh-networking functions such as determining lightpaths for connections. For example, the central control system 200 may determine a current topology based on the aggregate state information from some or all of the balloons 206A to 2061. The topology may provide a picture of the current optical links that are available in balloon network and/or the wavelength availability on the links. This topology may then be sent to some or all of the balloons so that a routing technique may be employed to select appropriate lightpath (and possibly backup lightpaths) for communications through the balloon network 204.

In a further aspect, the central control system 200 (and possibly regional control systems 202A to 202C as well) may also coordinate certain station-keeping functions for balloon network 204. For example, the central control system 200 may input state information that is received from balloons 206A to 206I to an energy function, which may effectively compare the current topology of the network to a desired topology, and provide a vector indicating a direction of movement (if any) for each balloon, such that the balloons can move towards the desired topology. Further, the central control system 200 may use altitudinal wind data to determine respective altitude adjustments that may be initiated to achieve the movement towards the desired topology. The central control system 200 may provide and/or support other station-keeping functions as well.

Figure 2 shows a distributed arrangement that provides centralized control, with regional control systems 202A to 202C coordinating communications between a central control system 200 and a balloon network 204. Such an arrangement may be useful to provide centralized control for a balloon network that covers a large geographic area. In some embodiments, a distributed arrangement may even support a global balloon network that provides coverage everywhere on earth. Of course, a distributed-control arrangement may be useful in other scenarios as well.

Further, it should be understood that other control-system arrangements are also possible. For instance, some implementations may involve a centralized control system with additional layers (e.g., sub-region systems within the regional control systems, and so on). Alternatively, control functions may be provided by a single, centralized, control system, which communicates directly with one or more downlink balloons.

In some embodiments, control and coordination of a balloon network may be shared by a ground-based control system and a balloon network to varying degrees, depending upon the implementation. In fact, in some embodiments, there may be no ground-based control systems. In such an embodiment, all network control and coordination functions may be implemented by the balloon network itself. For example, certain balloons may be configured to provide the same or similar functions as central control system 200 and/or regional control systems 202A to 202C. Other examples are also possible.

Furthermore, control and/or coordination of a balloon network may be decentralized. For example, each balloon may relay state information to, and receive state information from, some or all nearby balloons. Further, each balloon may relay state information that it receives from a nearby balloon to some or all nearby balloons. When all balloons do so, each balloon may be able to individually determine the state of the network. Alternatively, certain balloons may be designated to aggregate state information for a given portion of the network. These balloons may then coordinate with one another to determine the overall state of the network.

Further, in some aspects, control of a balloon networks may be partially or entirely localized, such that it is not dependent on the overall state of the network. For example, individual balloons may implement station-keeping functions that only consider nearby balloons. In particular, each balloon may implement an energy function that takes into account its own state and the states of nearby balloons. The energy function may be used to maintain and/or move to a desired position with respect to the nearby balloons, without necessarily considering the desired topology of the network as a whole. However, when each balloon implements such an energy function for station-keeping, the balloon network as a whole may maintain and/or move towards the desired topology.

As an example, each balloon A may receive distance information d₁ to dₖ with respect to each of its k closest neighbors. Each balloon A may treat the distance to each of the k balloons as a virtual spring with vector representing a force direction from the first nearest neighbor balloon i toward balloon A and with force magnitude proportional to dᵢ. The balloon A may sum each of the k vectors and the summed vector is the vector of desired movement for balloon A. Balloon A may attempt to achieve the desired movement by controlling its altitude.

Alternatively, this process could assign the force magnitude of each of these virtual forces equal to dᵢ x dᵢ, wherein dᵢ is proportional to the distance to the second nearest neighbor balloon, for instance. Other algorithms for assigning force magnitudes for respective balloons in a mesh network are possible.

In another embodiment, a similar process could be carried out for each of the k balloons and each balloon could transmit its planned movement vector to its local neighbors. Further rounds of refinement to each balloon's planned movement vector can be made based on the corresponding planned movement vectors of its neighbors. It will be evident to those skilled in the art that other algorithms could be implemented in a balloon network in an effort to maintain a set of balloon spacings and/or a specific networks capacity level over a given geographic location.

### 2d) Example Balloon Configuration

Various types of balloon systems may be incorporated in an example balloon network. As noted above, an example embodiment may utilize high-altitude balloons, which could typically operate in an altitude range between 18 km and 25 km. Figure 3 shows a high-altitude balloon 300, according to an example embodiment. As shown, the balloon 300 includes an envelope 302, a skirt 304, a payload 306, and a cut-down device 308, which is attached between the balloon 302 and payload 306.

The envelope 302 and skirt 304 may take various forms, which may be currently well-known or yet to be developed. For instance, the envelope 302 and/or skirt 304 may be made of materials including metalized Mylar or BoPet. Additionally or alternatively, some or all of the envelope 302 and/or skirt 304 may be constructed from a highly-flexible latex material or a rubber material such as chloroprene. Other materials are also possible. Further, the shape and size of the envelope 302 and skirt 304 may vary depending upon the particular implementation. Additionally, the envelope 302 may be filled with various different types of gases, such as helium and/or hydrogen. Other types of gases are possible as well.

The payload 306 of balloon 300 may include a processor 313 and on-board data storage, such as memory 314. The memory 314 may take the form of or include a non-transitory computer-readable medium. The non-transitory computer-readable medium may have instructions stored thereon, which can be accessed and executed by the processor 313 in order to carry out the balloon functions described herein. Thus, processor 313, in conjunction with instructions stored in memory 314, and/or other components, may function as a computer system 312 and further as a controller of balloon 300.

The payload 306 of balloon 300 may also include various other types of equipment and systems to provide a number of different functions. For example, payload 306 may include an optical communication system 316, which may transmit optical signals via an ultra-bright LED system 320, and which may receive optical signals via an optical-communication receiver 322 (e.g., a photodiode receiver system). Further, payload 306 may include an RF communication system 318, which may transmit and/or receive RF communications via an antenna system 340.

The payload 306 may also include a power supply 326 to supply power to the various components of balloon 300. The power supply 326 could include a rechargeable battery. In other embodiments, the power supply 326 may additionally or alternatively represent other means known in the art for producing power. In addition, the balloon 300 may include a solar power generation system 327. The solar power generation system 327 may include solar panels and could be used to generate power that charges and/or is distributed by the power supply 326.

The payload 306 may additionally include a positioning system 324. The positioning system 324 could include, for example, a global positioning system (GPS), an inertial navigation system, and/or a star-tracking system. The positioning system 324 may additionally or alternatively include various motion sensors (e.g., accelerometers, magnetometers, gyroscopes, and/or compasses).

The positioning system 324 may additionally or alternatively include one or more video and/or still cameras, and/or various sensors for capturing environmental data.

Some or all of the components and systems within payload 306 may be implemented in a radiosonde or other probe, which may be operable to measure, e.g., pressure, altitude, geographical position (latitude and longitude), temperature, relative humidity, and/or wind speed and/or wind direction, among other information.

As noted, balloon 300 includes an ultra-bright LED system 320 for free-pace optical communication with other balloons. As such, optical communication system 316 may be configured to transmit a free-space optical signal by modulating the ultra-bright LED system 320. The optical communication system 316 may be implemented with mechanical systems and/or with hardware, firmware, and/or software. Generally, the manner in which an optical communication system is implemented may vary, depending upon the particular application. The optical communication system 316 and other associated components are described in further detail below.

In a further aspect, balloon 300 may be configured for altitude control. For instance, balloon 300 may include a variable buoyancy system, which is configured to change the altitude of the balloon 300 by adjusting the volume and/or density of the gas in the balloon 300. A variable buoyancy system may take various forms, and may generally be any system that can change the volume and/or density of gas in the envelope 302.

In an example embodiment, a variable buoyancy system may include a bladder 310 that is located inside of envelope 302. The bladder 310 could be an elastic chamber configured to hold liquid and/or gas. Alternatively, the bladder 310 need not be inside the envelope 302. For instance, the bladder 310 could be a rigid bladder that could be pressurized well beyond neutral pressure. The buoyancy of the balloon 300 may therefore be adjusted by changing the density and/or volume of the gas in bladder 310. To change the density in bladder 310, balloon 300 may be configured with systems and/or mechanisms for heating and/or cooling the gas in bladder 310. Further, to change the volume, balloon 300 may include pumps or other features for adding gas to and/or removing gas from bladder 310. Additionally or alternatively, to change the volume of bladder 310, balloon 300 may include release valves or other features that are controllable to allow gas to escape from bladder 310. Multiple bladders 310 could be implemented within the scope of this disclosure. For instance, multiple bladders could be used to improve balloon stability.

In an example embodiment, the envelope 302 could be filled with helium, hydrogen or other lighter-than-air material. The envelope 302 could thus have an associated upward buoyancy force. In such an embodiment, air in the bladder 310 could be considered a ballast tank that may have an associated downward ballast force. In another example embodiment, the amount of air in the bladder 310 could be changed by pumping air (e.g., with an air compressor) into and out of the bladder 310. By adjusting the amount of air in the bladder 310, the ballast force may be controlled. In some embodiments, the ballast force may be used, in part, to counteract the buoyancy force and/or to provide altitude stability.

In other embodiments, the envelope 302 could be substantially rigid and include an enclosed volume. Air could be evacuated from envelope 302 while the enclosed volume is substantially maintained. In other words, at least a partial vacuum could be created and maintained within the enclosed volume. Thus, the envelope 302 and the enclosed volume could become lighter than air and provide a buoyancy force. In yet other embodiments, air or another material could be controllably introduced into the partial vacuum of the enclosed volume in an effort to adjust the overall buoyancy force and/or to provide altitude control.

In another embodiment, a portion of the envelope 302 could be a first color (e.g., black) and/or a first material from the rest of envelope 302, which may have a second color (e.g., write) and/or a second material. For instance, the first color and/or first material could be configured to absorb a relatively larger amount of solar energy than the second color and/or second material. Thus, rotating the balloon such that the first material is facing the sun may act to heat the envelope 302 as well as the gas inside the envelope 302. In this way, the buoyancy force of the envelope 302 may increase. By rotating the balloon such that the second material is facing the sun, the temperature of gas inside the envelope 302 may decrease. Accordingly, the buoyancy force may decrease. In this manner, the buoyancy force of the balloon could be adjusted by changing the temperature/volume of gas inside the envelope 302 using solar energy. In such embodiments, it is possible that a bladder 310 may not be a necessary element of balloon 300. Thus, in various contemplated embodiments, altitude control of balloon 300 could be achieved, at least in part, by adjusting the rotation of the balloon with respect to the sun.

Further, a balloon 306 may include a navigation system (not shown). The navigation system may implement station-keeping functions to maintain position within and/or move to a position in accordance with a desired topology. In particular, the navigation system may use altitudinal wind data to determine altitudinal adjustments that result in the wind carrying the balloon in a desired direction and/or to a desired location. The altitude-control system may then make adjustments to the density of the balloon chamber in order to effectuate the determined altitudinal adjustments and cause the balloon to move laterally to the desired direction and/or to the desired location. Alternatively, the altitudinal adjustments may be computed by a ground-based or satellite-based control system and communicated to the high-altitude balloon. In other embodiments, specific balloons in a heterogeneous balloon network may be configured to compute altitudinal adjustments for other balloons and transmit the adjustment commands to those other balloons.

As shown, the balloon 300 also includes a cut-down device 308. The cut-down device 308 may be configured to cause at least the payload 306 to land.

In some embodiments,the cut-down device 308 could include at least one cord, such as a balloon cord, connecting the payload 306 to the envelope 302 and a means for severing the cord (e.g., a shearing mechanism or an explosive bolt). In an example embodiment, the balloon cord, which may be nylon, is wrapped with a nichrome wire. An electrical signal could be passed through the nichrome wire to heat it and melt the cord, thereby cutting the payload 306 away from the envelope 302.

The cut-down device 308 could receive a control instruction from a control system that may determine, for example, that the balloon 300 is within a predetermined zone, which could relate to exclusion zone and/or a shadow zone. In response to the control instruction, the cut-down device 308 could pass a current through the nichrome wire so as to sever the balloon cord between the payload 306 and the envelope 302. In other words, the control system could cause the cut-down device 308 to cut the payload 306 away from the envelope 302 if the balloon is determined to be within the predetermined zone. Other triggers are possible to cause the cut-down device 308 to separate the payload 306 from the envelope 302.

In other embodiments, the cut-down device 308 could include a means for reducing a buoyancy of the envelope such that the payload 306 may land with the envelope 302. Reducing the buoyancy of the envelope could be performed in various ways. For example, the envelope could be deflated by reducing the volume of lifting gas in the envelope. In one embodiment, a pump could be used to reduce the volume of lifting gas in the envelope. In another embodiment, the cut-down device 308 could be operable to perforate or tear the envelope such that lifting gas could gradually escape. In yet another embodiment, the cut-down device 308 could be operable such that the envelope could be substantially vented by overturning the envelope such that the lifting gas exits the envelope.

In another example, ballast could be added to the envelope in order to reduce the buoyancy of the envelope. For instance, a pump could be used to introduce air or other gas into the envelope, thereby reducing the buoyancy of the envelope. The cut-down device 308 could alternatively or additionally use other means to cause at least the payload 306 to land in response to the balloon 300 entering a predetermined zone.

The cut-down device 308 may be operable if, for example, the payload needs to be accessed on the ground, such as to remove balloon 300 from a balloon network, when maintenance is due on systems within payload 306, and/or when power supply 326 needs to be recharged or replaced.

In an alternative arrangement, a balloon need not include a cut-down device 308. In such an arrangement, the navigation system may be operable to navigate the balloon to a landing location in the event the balloon needs to be removed from the network and/or accessed on the ground. Further, it is possible that a balloon may be self-sustaining, such that it does not need to be accessed on the ground. In yet other embodiments, in-flight balloons may be serviced by specific service balloons or another type of service aerostat or service aircraft.

### 2e) Example Heterogeneous Network

In some embodiments, a high-altitude-balloon network may include super-node balloons, which communicate with one another via optical links, as well as sub-node balloons, which communicate with super-node balloons via RF links. Generally, the optical links between super-node balloons may be configured to have more bandwidth than the RF links between super-node and sub-node balloons. As such, the super-node balloons may function as the backbone of the balloon network, while the sub-nodes may provide sub-networks providing access to the balloon network and/or connecting the balloon network to other networks.

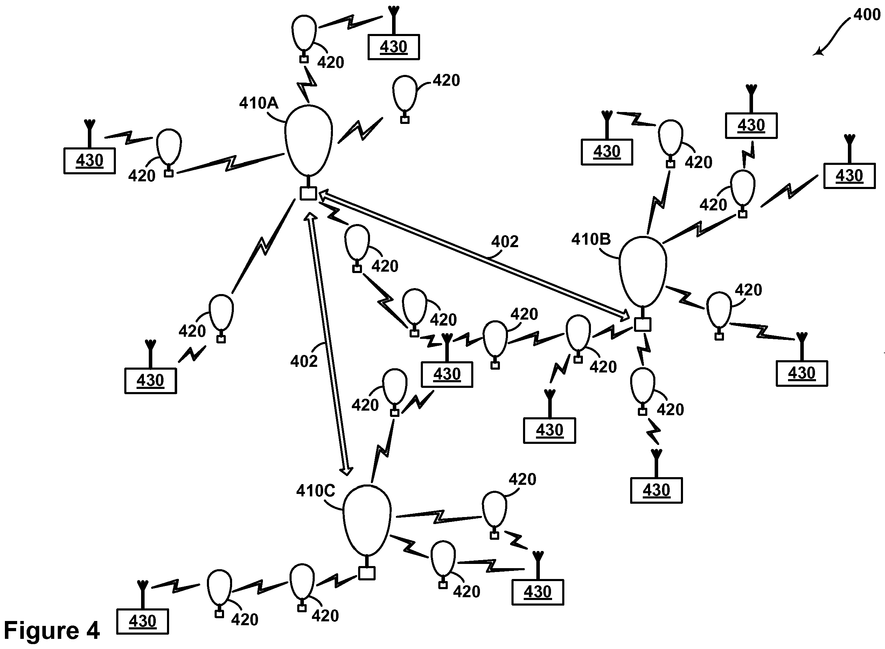

Figure 4 is a simplified block diagram illustrating a balloon networks that includes super-nodes and sub-nodes, according to an example embodiments. More specifically, Figure 4 illustrates a portion of a balloon network 400 that includes super-node balloons 410A to 410C (which may also be referred to as "super-nodes") and sub-node balloons 420 (which may also be referred to as "sub-nodes").

Each super-node balloon 410A to 410C may include a free-space optical communication system that is operable for packet-data communication with other super-node balloons. As such, super-nodes may communicate with one another over optical links. For example, in the illustrated embodiment, super-node 410A and super-node 401B may communicate with one another over optical link 402, and super-node 410A and supper-node 401C may communicate with one another over optical link 404.

Each of the sub-node balloons 420 may include a radio-frequency (RF) communication system that is operable for packet-data communication over one or more RF air interfaces. Accordingly, each super-node balloon 410A to 410C may include an RF communication system that is operable to route packet data to one or more nearby sub-node balloons 420. When a sub-node 420 receives packet data from a super-node 410, the sub-node 420 may use its RF communication system to route the packet data to a ground-based station 430 via an RF air interface.

As noted above, the super-nodes 410A to 410C may be configured for both longer-range optical communication with other super-nodes and shorter-range RF communications with nearby sub-nodes 420. For example, super-nodes 410A to 410C may use using high-power or ultra-bright LEDs to transmit optical signals over optical links 402, 404, which may extend for as much as 100 miles, or possibly more. Configured as such, the super-nodes 410A to 410C may be capable of optical communications at data rates of 10 to 50 GBit/sec or more.

A larger number of high-altitude balloons may then be configured as sub-nodes, which may communicate with ground-based Internet nodes at data rates on the order of approximately 10 MBit/sec. For instance, in the illustrated implementation, the sub-nodes 420 may be configured to connect the super-nodes 410 to other networks and/or directly to client devices.

Note that the data speeds and link distances described in the above example and elsewhere herein are provided for illustrative purposes and should not be considered limiting; other data speeds and link distances are possible.

In some embodiments, the super-nodes 410A to 410C may function as a core network, while the sub-nodes 420 function as one or more access networks to the core network. In such an embodiment, some or all of the sub-nodes 420 may also function as gateways to the balloon network 400. Additionally or alternatively, some or all of ground-based stations 430 may function as gateways to the balloon network 400.

Within the context of the present disclosure, any of the example systems described herein could be operable to determine a position of a balloon with respect to a predetermined zone, which includes an exclusion zone and a shadow zone. The example systems could additionally cause a cut-down device to cause at least a payload of the balloon to land in response to a determination that the position of the balloon is within the predetermined zone. Several specific example implementations are described in further detail below.

### 3. Example Implementations

Several example implementations will now be described herein. It will be understood that there are many ways to implement the devices, systems, and methods disclosed herein. Accordingly, the following examples are not intended to limit the scope of the present disclosure.

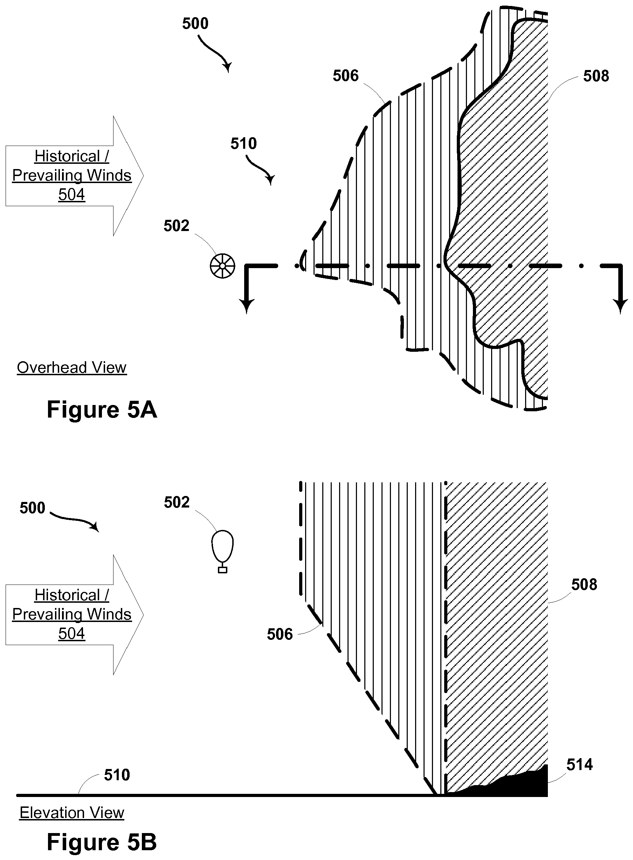

Figures 5A and 5B illustrate overhead and elevation views, respectively, of a balloon operating scenario 500 at a first time. In the scenario 500, a balloon 502 could be subject to historical or prevailing winds 504. The balloon 502 could be above a body of water 10. In other embodiments, the balloon 502 need not be above a body of water 510.

An exclusion zone 508 could include airspace above a restricted area 514. As shown, restricted area 514 is a land area. In other examples, a restricted area could include a body of water. Based on the historical or prevailing winds 504, a shadow zone 506 could be defined as extending substantially westward from the exclusion zone 508. The shadow zone 506 could include a set of locations from which the balloon 502 is more likely than a predetermined likelihood to enter the exclusion zone 508. Various methods for determining the boundaries of the shadow zone 506 are described elsewhere in the present disclosure.

The respective boundaries of the shadow zone 506 and/or the exclusion zone 508 could be based on altitude. For example, since wind speeds and wind direction could differ based on altitudes, the boundaries of the shadow zone could vary based on altitude as well. Thus, as shown in the combination of Figures 5A and 5B, one or more boundaries of the shadow zone may include 'sloped' zones that may account for varying altitudinal wind data, ascent/descent/lateral movement rates of the balloon 502, and/or a parachute glide path 531. Other altitude-dependent boundaries of the shadow zone 506 are possible.

The boundaries of the shadow zone 506 could be determined dynamically based on, for example, the boundaries of the exclusion zone 508, the expected environmental conditions, and/or the current speed and heading of the balloon 502. In other embodiments, the boundaries of the shadow zone 506 could be static and could be based on the boundaries of the exclusion zone 508 and historical wind data. In yet other embodiments, at least one boundary of the shadow zone 506 could remain static (e.g., maximum and minimum balloon operating altitudes), while other boundaries of the shadow zone 506 could be adjusted based on real-time information. Other ways to determine and/or define the boundaries of the shadow zone 506 are possible.

The combination of the exclusion zone 508 and the shadow zone 506 could represent a predetermined zone. A control system in the balloon 502 could determine the location of the balloon with respect to the predetermined zone. The control system could alternatively be located in part or fully outside the balloon 502.

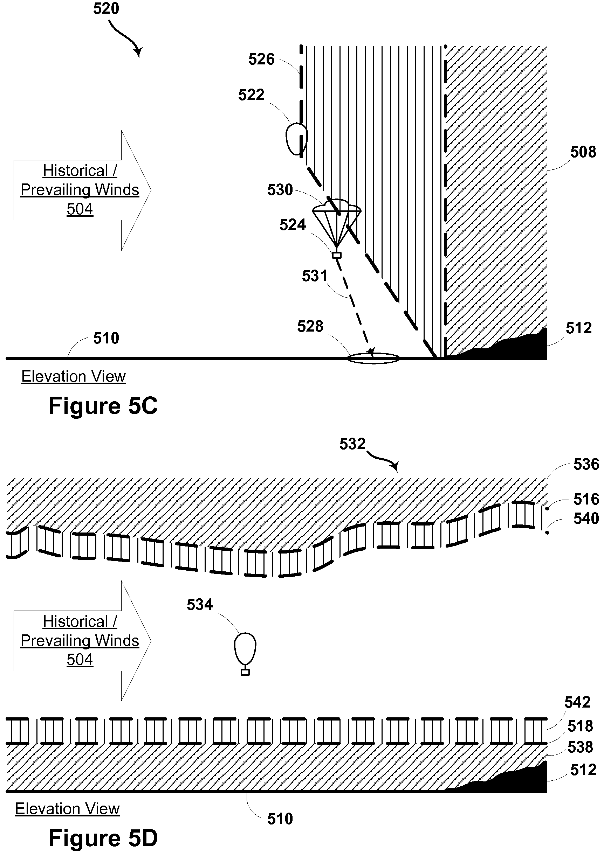

Figure 5C illustrates a balloon operating scenario 520 at a second time. The second time could represent a point in time later than the first time. The second time could illustrate a point in time after the control system determines the balloon is within the predetermined zone. In such a scenario 520, the balloon 522 may have crossed a boundary of the shadow zone 526 and thus moved within the predetermined zone.

In response to the determination that the balloon is within the predetermined zone, the control system may cause the cut-down device to separate the payload 524 from the envelope 522. For example, the control system may deliver an electrical signal through a wire that is proximal to the balloon cord, which may connect the envelope 522 to the payload 524. The wire, which could be made of nichrome, may be configured to emit heat in response to an electrical signal. The balloon cord may sever due to the emitted heat and the payload 524 may be separated from the envelope 522.

Upon envelope/payload separation, a parachute 530 may be deployed in an effort to slow the descent of the payload 524. Upon parachute 530 deployment, the payload 524 may descend by gravity via a parachute glide path 531 to a recovery area 528.

In some embodiments, the parachute 530 may be steerable so as to steer the payload 524 toward the recovery area 528. The computer system of the payload 524 or another computer system (e.g., a server networks) could be operable to steer the parachute 530 toward the recovery area 528. In an example embodiment, parachute 530 could represent a ram-air parafoil-type parachute. Other types of parachutes, such as Rogallo wing, round, and cruciform (square) parachutes, are possible within the context of the present disclosure.

The Figure 5C illustrates separation of the payload 524 from the envelope 522 of the balloon in response to the balloon entering the shadow zone 526; however, other ways of causing at least the payload 524 to land are possible within the context of the present disclosure. For example, the cut-down device could be operable to reduce a buoyancy of the envelope 522 (e.g., by adding ballast and/or venting a lifting gas) so as to cause the balloon to land.

Figure 5D illustrates a scenario 532 in which exclusion zones 536 and 538 are defined by a maximum altitude (ceiling) 516 and/or a minimum altitude (hard deck) 518. These maximum and minimum altitudes could restrict or limit the operational altitudes for balloon 534. Such minimum and maximum altitudes could be established to improve public safety, balloon longevity, operational performance, and operating cost, among other reasons.

Exclusion zones 536 and 538 related to a maximum altitude 516 and/or a minimum altitude 518 could include shadow zones 540 and 542 that could include locations from which the balloon 534 is likely to enter one of the exclusion zones 536 or 538. The shadow zone could be determined based on the historical/prevailing winds 504, as well as the position, speed, and heading of balloon 534.

The altitudes that define the shadow zone and/or the exclusion zone could be dependent on ground position, as shown in Figure 5D. In other embodiments, the altitudes that define shadow zone and/or the exclusion zone could be substantially independent of ground position.

If the position of the balloon 534 is determined to be within the predetermined zone (which in this scenario may include airspace in and above shadow zone 540 and airspace in and below shadow zone 542), the cut-down device could be used to cause at least the payload of the balloon 534 to land.

In some embodiments, the predetermined zone could be based on geographical information (e.g., depend fully or substantially on altitude). For instance, the predetermined zone could be any altitude below 50,000 feet. In other embodiments, the predetermined zone could be partially or fully based on geographical information. For example, the predetermined zone could be any altitude below 55,000 feet above the United States and the predetermined zone could be any altitude below 50,000 feet everywhere else. Other ways to define the boundaries of the predetermined zone are possible.

In some embodiments, an exclusion zone and shadow zone defined by a restricted area (e.g., as shown in Figs 5A-5C) could be combined with an exclusion zone and shadow zone defined by altitudes (e.g., as shown in Figure 5D).

### 4. Example Methods

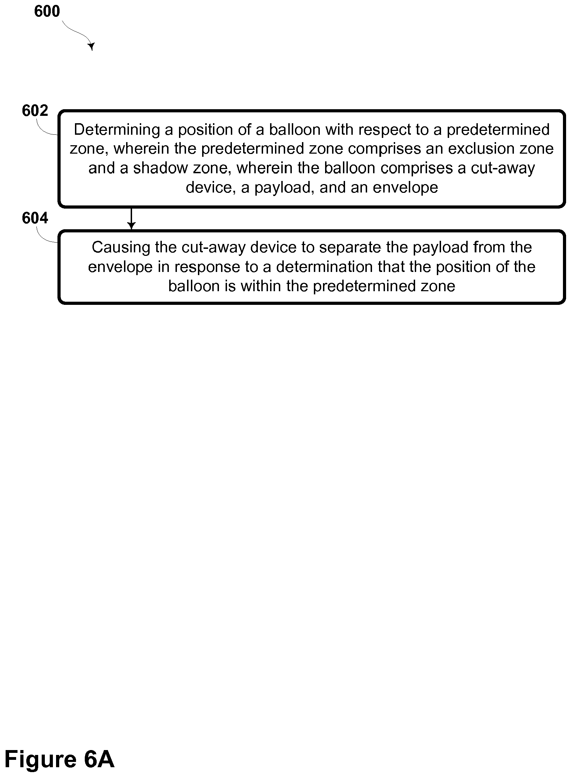

A method 600 is provided for causing a cut-down device of a balloon to cause at least a payload of the balloon to land in response to a determination that a position of the balloon is within a predetermined zone, which includes an exclusion zone and a shadow zone. The method could be performed using any of the apparatus shown and described in reference to Figures 1-4, however, other configuration could be used. Figure 6A illustrates the steps in an example method, however, it is understood that in other embodiments, the steps may appear in different order and steps could be added or subtracted.

Step 602 includes determining a position of a balloon with respect to a predetermined zone. The predetermined zone includes an exclusion zone and a shadow zone. The balloon includes a cut-down device, a payload, and an envelope.

The position of the balloon could be determined with respect to the predetermined zone in several different ways. For example, the balloon could determine the position of the balloon using a global positioning system (GPS), an inertial navigation system (INS), and/or a map. In other embodiments, the determination of the position of the balloon with respect to the predetermined zone could be performed in part or in full by a server network.

The map could include at least geographic information about the predetermined zone. Other forms of information could be included in the map, such as maximum and minimum altitude limits, exclusion zones, shadow zones, and/or historical or expected environmental conditions (e.g., wind speed and direction). The map could include other information as well. The map could be associated and/or stored using the computer system of the balloon (e.g., computer system 312). The map could alternatively be stored fully or in part using other computer systems, such as a server network.

The predetermined zone could include at least two portions.

First, an exclusion zone could represent any type of restricted airspace that the balloon should not enter. For example, the exclusion zone could include an altitude maximum and/or minimum (hard deck). The altitude maximum could represent an altitude above which the balloon could become inoperable, ineffective, and/or in danger of bursting. The altitude minimum could represent an altitude below which the balloon could be ineffective, inoperable, collide with objects on the ground, or be within commercial airspace. Altitude minimums and maximums may be established based on other rationale as well. In other embodiments, the exclusion zone could include a restricted area (e.g., an airbase, a tall building, etc.), airspace above a restricted area, a foreign country, a populated area, or any other undesirable flying area. In yet other embodiments, the exclusion zone could include an enclosed volume of airspace. For instance, the enclosed volume of airspace may represent a flight path or a volume of airspace around an object such as an airplane or any other object that may need to be avoided. Other examples of exclusion zones are possible.

Second, a shadow zone could represent a location from which the balloon is more likely than a predetermined likelihood to enter the exclusion zone based on expected environmental conditions. Boundaries of the shadow zone could be based on the current or historical wind direction and/or wind speed. For instance, if a prevailing wind direction is from the west at 5 miles per hour, a shadow zone could extend substantially in a westward direction from the exclusion zone. In particular, the shadow zone could be defined to be the set of locations from which the balloon could be more likely than a predetermined likelihood (e.g., 50% probability) to enter the exclusion zone based on the prevailing winds. That is, the boundaries of the shadow zone could be defined to include the locations from which the balloon is more than 50% likely to move into the exclusion zone.

The expected environmental conditions could be determined by the balloon and/or a computer system elsewhere. The expected environmental conditions could be based on real-time sensor data regarding, for instance, wind speed, wind direction, and other environmental information. In other embodiments, the expected environmental conditions could be based on weather forecasts and/or historical wind data. In yet other embodiments, other balloons in the high-altitude balloon network could relay information about their respective local environments. The expected environmental conditions could be determined based at least on the information from the other balloons. Other ways to obtain information about the expected environmental conditions are possible.

The balloon could move into the exclusion zone due to, for instance, prevailing winds. In one embodiment, the balloon could get blown into the exclusion zone. Other embodiments are possible.

The likelihood of a balloon entering an exclusion zone based on expected environmental conditions could be determined by a computer system on the balloon or elsewhere (e.g., a server network). The determination could include various simulations that could include the expected environmental conditions, the boundaries of the exclusion zone, and the current position, speed, and/or heading of the balloon. For example, a plurality of Monte Carlo simulations could be run by a computer system in an effort to predict the likelihood of the balloon to enter the exclusion zone. Other computer algorithms are possible to estimate the likelihood of the balloon to enter the exclusion zone.

Based on such determinations, the computer system could provide a heat map that could represent the likelihood of the balloon to enter the exclusion zone from a given point in three-dimensional space. Based on the heat map, the shadow zone could be determined. For example, the shadow zone could include all points in the heat map that correspond to at least a predetermined likelihood of 50% that the balloon will enter the exclusion zone. Other predetermined likelihoods and ways to determine the boundaries of the shadow zone are possible.

Step 604 includes causing the cut-down device to cause at least the payload of the balloon to land in response to a determination that the position of the balloon is within the predetermined zone. The cut-down device could be similar to the cut-down device 308.

As described herein, the cut-down device could deliver an electrical signal, such as an electric current, to pass through a nichrome wire wrapped around the balloon cord. In conducting such electric current, the nichrome wire may emit heat. In response to the emitted heat, the balloon cord could be configured to melt and sever. This could separate the payload from the envelope.

In other embodiments, the cut-down device could be operable to cause at least the payload of the balloon using other means. For instance, the aforementioned heating method could be used to burst the envelope, form a hole in the envelope, and/or cause the envelope to tear. Methods other than heating could also be used (e.g., cutting, perforation, abrasion, etc.). Thus, in some embodiments, the envelope could be caused to land with the payload of the balloon, so as to improve public health and safety, among other benefits.

Upon causing at least the payload to land, the payload may deploy a parachute configured to control the rate of descent of the payload. The parachute may also be configured to steer the payload towards a recovery area. Upon reaching the recovery area, the payload and, in some cases, the entire balloon, could be recovered.

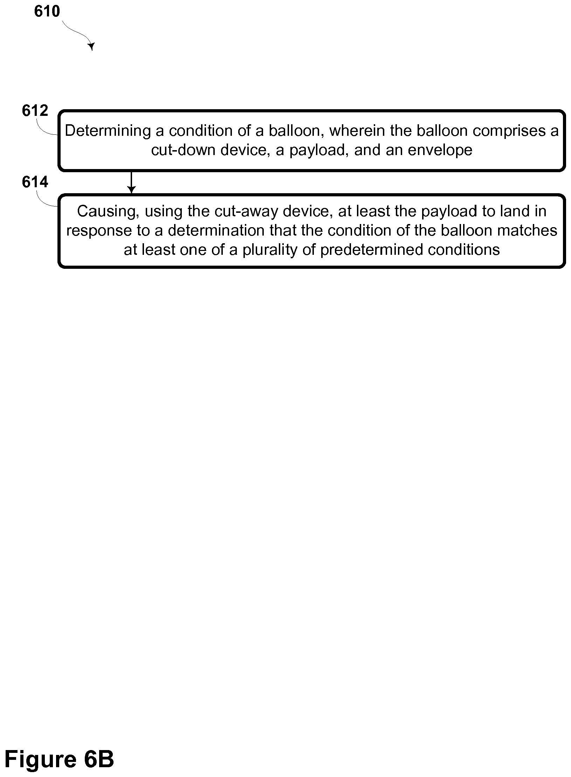

As shown in Figure 6B, another method 610 is provided for determining a condition of a balloon, which includes a cut-down device, a payload, and an envelope, and causing, using the cut-down device, at least the payload to land in response to a determination that the condition of the balloon matches at least one of a plurality of predetermined conditions. The method could be performed using any of the apparatus shown and described in reference to Figures 1-4, however, other configurations could be used. Figure 6B illustrates the steps in an example method, however, it is understood that in other embodiments, the steps may appear in different order and steps could be added or subtracted.

Method step 612 includes determining a condition of a balloon. The balloon includes a cut-down device, a payload, and an envelope. In some embodiments, the balloon could be the same or similar to balloon 300 as described in reference to Figure 3. The balloon could be part of a high-altitude balloon network.

Determining the condition of the balloon could include using sensor data or other data to determine information about the location, heading, and/or speed the balloon. Determining the condition of the balloon could additionally or alternatively include obtaining information about the operational status of various hardware and software associated with the balloon. Also, determining the condition of the balloon could represent obtaining information about current and/or historical weather conditions, airspace permissions, current events, other flying bodies, etc.

Method step 614 includes causing, using the cut-down device, at least the payload to land in response to a determination that the condition of the balloon matches at least one of a plurality of predetermined conditions.

The plurality of predetermined conditions could represent any number of conditions and/or states that could make it desirable and/or favorable to cause at least the payload to land. For example, the plurality of predetermined conditions could include at least one of: a hardware malfunction, a software malfunction, a low battery, the balloon being located within a predetermined zone (e.g., as described above for Figures 5A-5D), and an uncertainty in the location of the balloon. Other predetermined conditions could be possible.

Upon determining the condition of the balloon, a computer system located with the balloon or located elsewhere (e.g., a server network) could be configured to determine if a match exists between the condition of the balloon and one or more of the plurality of predetermined conditions. In response to a match being determined, an instruction could be transmitted to the cut-down device so as to cause at least the payload to land.

Causing at least the payload to land using the cut-down device could include separating the payload from the envelope as described elsewhere in this disclosure. Alternatively, the cut-down device could be operable to cause the envelope and the payload to descend to the ground substantially together. For instance, the cut-down device could introduce holes into the envelope (e.g., by heating or cutting the envelope). In another example, the cut-down device could add ballast to the envelope, reducing the buoyance of the envelope. Other means of causing at least the payload to land in response to the determination that the condition of the balloon matches at least one of the plurality of predetermined conditions are implicitly considered herein.

Example methods, such as method 600 of Figure 6A and/or method 610 of Figure 6B, may be carried out in whole or in part by one or more balloons and their respective subsystems. Accordingly, example methods could be described by way of example herein as being implemented by the balloon. However, it should be understood that an example method may be implemented in whole or in part by other computing devices. For example, an example method may be implemented in whole or in part by a server system, which receives data from the balloon or from elsewhere. Other examples of computing devices or combinations of computing devices that can implement an example method are possible.

Those skilled in the art will understand that there are other similar methods that could describe determining a position of a balloon with respect to a predetermined zone, which includes an exclusion zone and a shadow zone, and causing a cut-down device cause at least a payload to land in response to a determination that the position of the balloon is within the predetermined zone. Additionally, there could be similar methods related to determining a condition of a balloon, which includes a cut-down device, a payload, and an envelope, and causing, using the cut-down device, at least the payload to land in response to a determination that the condition of the balloon matches at least one of a plurality of predetermined conditions. Those similar methods are implicitly contemplated herein.

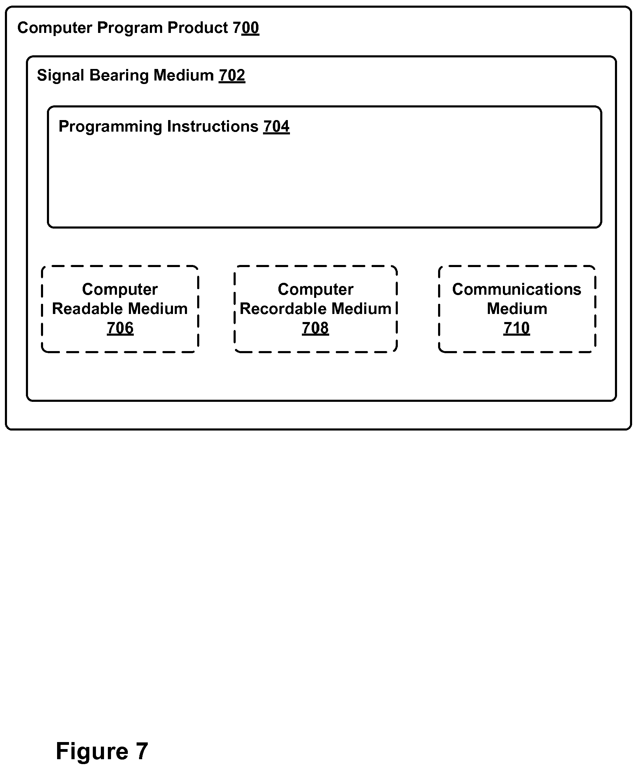

In some embodiments, the disclosed methods may be implemented as computer program instructions encoded on a non-transitory computer-readable storage media in a machine-readable format, or on other non-transitory media or articles of manufacture. Figure 7 is a schematic illustrating a conceptual partial view of an example computer program product that includes a computer program for executing a computer process on a computing device, arranged according to at least some embodiments presented herein.

In one embodiment, the example computer program product 700 is provided using a signal bearing medium 702. The signal bearing medium 702 may include one or more programming instructions 704 that, when executed by one or more processors may provide functionality or portions of the functionality described above with respect to Figures 1-6. In some examples, the signal bearing medium 702 may encompass a computer-readable medium 706, such as, but not limited to, a hard disk drive, a Compact Disc (CD), a Digital Video Disk (DVD), a digital tape, memory, etc. In some implementations, the signal bearing medium 702 may encompass a computer recordable medium 708, such as, but not limited to, memory, read/write (R/W) CDs, R/W DVDs, etc. In some implementations, the signal bearing medium 702 may encompass a communications medium 710, such as, but not limited to, a digital and/or an analog communication medium (e.g., a fiber optic cable, a waveguide, a wired communications link, a wireless communication link, etc.). Thus, for example, the signal bearing medium 702 may be conveyed by a wireless form of the communications medium 710.

The one or more programming instructions 704 may be, for example, computer executable and/or logic implemented instructions. In some examples, a computing device such as the computer system 312 of Figure 3 may be configured to provide various operations, functions, or actions in response to the programming instructions 704 conveyed to the computer system 312 by one or more of the computer readable medium 706, the computer recordable medium 708, and/or the communications medium 710.

The non-transitory computer readable medium could also be distributed among multiple data storage elements, which could be remotely located from each other. The computing device that executes some or all of the stored instructions could be a device, such as the balloon 300 shown and described in reference to Figure 3. Alternatively, the computing device that executes some or all of the stored instructions could be another computing device, such as a server.

The above detailed description describes various features and functions of the disclosed systems, devices, and methods with reference to the accompanying figures. While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method, comprising:
determining a position of a balloon (300) with respect to a predetermined zone, wherein the predetermined zone comprises an exclusion zone (508) and a shadow zone (506), wherein the exclusion zone comprises airspace over a predetermined geographic area and the shadow zone comprises airspace over a geographic area adjacent the predetermined geographic area, and wherein the balloon comprises a cut-down device (308), a payload (306), and an envelope (302); and
causing, using the cut-down device, at least the payload to land in response to a determination that the position of the balloon is within the predetermined zone.

2. The method of claim 1, wherein causing at least the payload to land comprises separating the payload (306) from the envelope (302).

3. The method of claim 1, wherein causing at least the payload (306) to land comprises reducing a buoyancy of the envelope (302) for example by adding ballast to the envelope or by venting at least a portion of a lifting gas within the envelope.

4. The method of claim 1, wherein causing, using the cut-down device (308), at least the payload (302) to land in response to a determination that the position of the balloon (300) is within the predetermined zone comprises:
determining that the balloon has crossed a boundary of the shadow zone (506); and
responsively causing the cut-down device (308) to separate the payload (306) from the envelope (302).

5. The method of claim 1, wherein the shadow zone (506) comprises a zone from which the balloon (300) is more likely than a predetermined likelihood to enter the exclusion zone (508) based on expected environmental conditions.

6. The method of claim 1 further comprising causing a deployment of at least one parachute (530) in response to the determination that the position of the balloon (522) is within the predetermined zone, wherein the at least one parachute is coupled to the payload (524).

7. The method of claim 6, further comprising, upon the deployment of the at least one parachute (530), recovering the payload (524) in a recovery area (528).

8. A balloon (300), comprising:
an envelope (302);
a payload (306);
a cut-down device (308) configured to cause at least the payload to land; and
a control system (312) configured to: i) determine a position of the balloon with respect to a predetermined zone, wherein the predetermined zone comprises an exclusion zone (508) and a shadow zone (506), wherein the exclusion zone comprises airspace over a predetermined geographic area and the shadow zone comprises airspace over a geographic area adjacent the predetermined geographic area; and ii) cause the cut-down device to cause at least the payload to land in response to a determination that the position of the balloon is within the predetermined zone.

9. The balloon of claim 8, configured to perform a method as claimed in any one of claims 2 to 7.

10. The balloon of claim 8 or 9, wherein the control system (312) is configured to determine the position of the balloon with respect to the predetermined zone using at least one of: a global positioning system (GPS), an inertial navigation system (INS), and a map of at least the predetermined zone.

11. The balloon of claim 8, 9 or 10, further comprising a cord and a wire proximate to the cord, wherein the cord is mechanically connected to the envelope (302) and to the payload (306), wherein the wire is configured to emit heat in response to an electrical signal from the cut-down device (308), wherein the cord is configured to sever in response to the emitted heat.

12. The balloon of claim 8 or 9 further comprising at least one parachute (530) coupled to the payload (524), wherein the at least one parachute is configured to deploy in response to the determination that the position of the balloon (522) is within the predetermined zone.

13. A non-transitory computer readable medium having stored therein instructions executable by a computer system to cause the computer system to perform a method as claimed in any one of claims 1 to 7.

14. The method of claim 1 including:
causing, using the cut-down device (308), at least the payload (306) to land in response to a determination that the condition of the balloon (300) matches at least one of a plurality of predetermined conditions.

15. The method of claim 14, wherein the plurality of predetermined conditions comprises at least one of: a hardware malfunction, a software malfunction, a low battery, the balloon being located within a predetermined zone, and an uncertainty in the location of the balloon (300).

## Patentansprüche

1. Verfahren, das Folgendes umfasst:
Bestimmen der Position eines Ballons (300) im Verhältnis zu einer vorher festgelegten Zone, wobei die vorher festgelegte Zone eine Sperrzone (508) und eine Schattenzone (506) umfasst, wobei die Sperrzone den Luftraum über einem vorher festgelegten geographischen Gebiet umfasst und die Schattenzone den Luftraum über einem geographischen Gebiet neben dem vorher festgelegten geographischen Gebiet umfasst und wobei der Ballon ein Gerät zum Abtrennen (308), eine Nutzlast (306) und eine Hülle (302) umfasst; und
Veranlassen mithilfe des Abtrenngeräts, dass zumindest die Nutzlast in Reaktion auf die Bestimmung landet, dass sich die Position des Ballons innerhalb der vorher festgelegten Zone befindet.

2. Verfahren nach Anspruch 1, wobei das Veranlassen, dass zumindest die Nutzlast landet, das Abtrennen der Nutzlast (306) von der Hülle (302) umfasst.

3. Verfahren nach Anspruch 1, wobei das Veranlassen, dass zumindest die Nutzlast (306) landet, das Verringern des Auftriebs der Hülle (302) umfasst, beispielsweise durch Hinzufügen von Ballast zur Hülle oder durch Ablassen von zumindest einem Teil des Traggases aus der Hülle.

4. Verfahren nach Anspruch 1, wobei das Veranlassen mithilfe des Abtrenngeräts (308), dass zumindest die Nutzlast (302) in Reaktion auf die Bestimmung landet, dass sich die Position des Ballons (300) innerhalb der vorher festgelegten Zone befindet, Folgendes umfasst:
Bestimmen, dass der Ballon eine Grenze der Schattenzone (506) überschritten hat; und
Veranlassen in Reaktion darauf, dass das Abtrenngerät (308) die Nutzlast (306) von der Hülle (302) abtrennt.

5. Verfahren nach Anspruch 1, wobei die Schattenzone (506) eine Zone umfasst, aus der der Ballon (300) basierend auf den erwarteten Umweltbedingungen mit einer Wahrscheinlichkeit größer als die vorher festgelegte Wahrscheinlichkeit die Sperrzone (508) erreicht.

6. Verfahren nach Anspruch 1, das weiterhin das Veranlassen des Auslösens mindestens eines Fallschirms (530) in Reaktion auf die Bestimmung umfasst, dass sich die Position des Ballons (522) innerhalb der vorher festgelegten Zone befindet, wobei der mindestens eine Fallschirm mit der Nutzlast (524) verbunden ist.

7. Verfahren nach Anspruch 6, das weiterhin das Bergen der Nutzlast (524) in einer Bergungszone (528) nach Auslösen des mindestens einen Fallschirms (530) umfasst.

8. Ballon (300), der Folgendes umfasst:
eine Hülle (302);
eine Nutzlast (306);
ein Abtrenngerät (308), das dazu konfiguriert ist, zu veranlassen, dass zumindest die Nutzlast landet; und
ein Steuersystem (312), das dazu konfiguriert ist: i) die Position des Ballons im Verhältnis zu einer vorher festgelegten Zone zu bestimmen, wobei die vorher festgelegte Zone eine Sperrzone (508) und eine Schattenzone (506) umfasst, wobei die Sperrzone den Luftraum über einem vorher festgelegten geographischen Gebiet umfasst und die Schattenzone den Luftraum über einem geographischen Gebiet neben dem vorher festgelegten geographischen Gebiet umfasst; und ii) das Abtrenngerät dazu zu veranlassen, zumindest die Nutzlast dazu zu veranlassen, in Reaktion auf die Bestimmung zu landen, dass sich die Position des Ballons innerhalb der vorher festgelegten Zone befindet.

9. Ballon nach Anspruch 8, der dazu konfiguriert ist, ein Verfahren nach einem der Ansprüche 2 bis 7 durchzuführen.

10. Ballon nach Anspruch 8 oder 9, wobei das Steuersystem (312) dazu konfiguriert ist, die Position des Ballons im Verhältnis zu einer vorher festgelegten Zone zu bestimmen, indem es zumindest eines der folgenden verwendet: ein Globales Positionsbestimmungssystem (GPS), ein inertiales Navigationssystem (INS) oder eine Karte von zumindest der vorher festgelegten Zone.

11. Ballon nach Anspruch 8, 9 oder 10, der weiterhin eine Leitungsschnur und einen Draht nahe der Leitungsschnur umfasst, wobei die Leitungsschnur mechanisch mit der Hülle (302) und der Nutzlast (306) verbunden ist, wobei der Draht dazu konfiguriert ist, in Reaktion auf ein elektrisches Signal des Abtrenngeräts (308) Wärme abzugeben, wobei die Leitungsschnur dazu konfiguriert ist, in Reaktion auf die abgegebene Wärme zu reißen.

12. Ballon nach Anspruch 8 oder 9, der weiterhin mindestens einen Fallschirm (530) umfasst, der mit der Nutzlast (524) verbunden ist, wobei der mindestens eine Fallschirm dazu konfiguriert ist, sich in Reaktion auf die Bestimmung, dass sich die Position des Ballons (522) innerhalb der vorher festgelegten Zone befindet, zu öffnen.

13. Dauerhaftes computerlesbares Speichermedium, in dem von einem Computersystem ausführbare Befehle gespeichert sind, die das Computersystem dazu veranlassen, ein Verfahren nach einem der Ansprüche 1 bis 7 durchzuführen.

14. Verfahren nach Anspruch 1, das Folgendes einschließt:
Veranlassen mithilfe des Abtrenngeräts (308), dass zumindest die Nutzlast (306) in Reaktion auf die Bestimmung landet, dass der Zustand des Ballons (300) zumindest einem von einer Vielzahl von vorher festgelegten Zuständen entspricht.

15. Verfahren nach Anspruch 14, wobei die Vielzahl von vorher festgelegten Zuständen zumindest einen der folgenden umfasst: eine Hardware-Fehlfunktion, eine Software-Fehlfunktion, ein niedriger Batterieladezustand, Position des Ballons innerhalb einer vorher festgelegten Zone oder Unklarheit über die Position des Ballons (300).

## Revendications

1. Procédé, comprenant :
la détermination d'une position d'un ballon (300) par rapport à une zone prédéterminée, dans lequel la zone prédéterminée comprend une zone d'exclusion (508) et une zone d'ombre (506), dans lequel la zone d'exclusion comprend un espace aérien au-dessus d'une zone géographique prédéterminée et la zone d'ombre comprend un espace aérien au-dessus d'une zone géographique adjacente à la zone géographique prédéterminée, et dans lequel le ballon comprend un dispositif de coupe (308), une charge utile (306), et une enveloppe (302) ; et
le fait de faire en sorte que, en utilisant le dispositif de coupe, au moins la charge utile atterrisse en réponse à une détermination que la position du ballon se trouve dans la zone prédéterminée.

2. Procédé selon la revendication 1, dans lequel le fait de faire en sorte qu'au moins la charge utile atterrisse comprend la séparation de la charge utile (306) de l'enveloppe (302).

3. Procédé selon la revendication 1, dans lequel le fait de faire en sorte qu'au moins la charge utile (306) atterrisse comprend la réduction d'une flottabilité de l'enveloppe (302) par exemple en ajoutant du lest à l'enveloppe ou en évacuant au moins une partie d'un gaz de sustentation à l'intérieur de l'enveloppe.

4. Procédé selon la revendication 1, dans lequel le fait de faire en sorte que, en utilisant le dispositif de coupe (308), au moins la charge utile (302) atterrisse en réponse à une détermination que la position du ballon (300) se trouve dans la zone prédéterminée comprend :
la détermination que le ballon a franchi une limite de la zone d'ombre (506) ; et
en réponse, le fait de faire en sorte que le dispositif de coupe (308) sépare la charge utile (306) de l'enveloppe (302).

5. Procédé selon la revendication 1, dans lequel la zone d'ombre (506) comprend une zone à partir de laquelle il est plus probable qu'une probabilité prédéterminée que le ballon (300) entre dans la zone d'exclusion (508) sur la base de conditions environnementales attendues.

6. Procédé selon la revendication 1 comprenant en outre le fait de provoquer un déploiement d'au moins un parachute (530) en réponse à la détermination que la position du ballon (522) se trouve dans la zone prédéterminée, dans lequel l'au moins un parachute est couplé à la charge utile (524).

7. Procédé selon la revendication 6, comprenant en outre, lors du déploiement de l'au moins un parachute (530), la récupération de la charge utile (524) dans une zone de récupération (528).

8. Ballon (300), comprenant :
une enveloppe (302) ;
une charge utile (306) ;
un dispositif de coupe (308) configuré pour faire en sorte qu'au moins la charge utile atterrisse ; et
un système de commande (312) configuré pour : i) déterminer une position du ballon par rapport à une zone prédéterminée, dans lequel la zone prédéterminée comprend une zone d'exclusion (508) et une zone d'ombre (506), dans lequel la zone d'exclusion comprend un espace aérien au-dessus d'une zone géographique prédéterminée et la zone d'ombre comprend un espace aérien au-dessus d'une zone géographique adjacente à la zone géographique prédéterminée ; et ii) faire en sorte que le dispositif de coupe fasse en sorte qu'au moins la charge utile atterrisse en réponse à une détermination que la position du ballon se trouve dans la zone prédéterminée.

9. Ballon selon la revendication 8, configuré pour mettre en oeuvre un procédé selon l'une quelconque des revendications 2 à 7.

10. Ballon selon la revendication 8 ou 9, dans lequel le système de commande (312) est configuré pour déterminer la position du ballon par rapport à la zone prédéterminée en utilisant au moins un élément parmi : un système de positionnement mondial (GPS), un système de navigation inertielle (INS), et une carte d'au moins la zone prédéterminée.

11. Ballon selon la revendication 8, 9 ou 10, comprenant en outre une corde et un fil à proximité de la corde, dans lequel la corde est reliée de manière mécanique à l'enveloppe (302) et à la charge utile (306), dans lequel le fil est configuré pour émettre de la chaleur en réponse à un signal électrique en provenance du dispositif de coupe (308), dans lequel la corde est configurée pour se rompre en réponse à la chaleur émise.

12. Ballon selon la revendication 8 ou 9 comprenant en outre au moins un parachute (530) couplé à la charge utile (524), dans lequel l'au moins un parachute est configuré pour se déployer en réponse à la détermination que la position du ballon (522) se trouve dans la zone prédéterminée.

13. Support lisible par ordinateur non transitoire ayant stocké à l'intérieur de celui-ci des instructions pouvant être exécutées par un système informatique de façon à faire en sorte que le système informatique mette en oeuvre un procédé selon l'une quelconque des revendications 1 à 7.

14. Procédé selon la revendication 1 comprenant :
le fait de faire en sorte que, en utilisant le dispositif de coupe (308), au moins la charge utile (306) atterrisse en réponse à une détermination que la condition du ballon (300) correspond à au moins une d'une pluralité de conditions prédéterminées.

15. Procédé selon la revendication 14, dans lequel la pluralité de conditions prédéterminées comprend au moins un élément parmi : un dysfonctionnement matériel, un dysfonctionnement logiciel, une batterie faible, le ballon se trouvant dans une zone prédéterminée, et une incertitude concernant l'emplacement du ballon (300).
